(19) Europäisches Patentamt
European Patent Office
Office européen des brevets

(11) EP 3 360 948 A1

(12) EUROPEAN PATENT APPLICATION
published in accordance with Art. 153(4) EPC

(43) Date of publication:
15.08.2018 Bulletin 2018/33

(51) Int Cl.:
C10J 3/54 (2006.01)    C21B 5/00 (2006.01)

(21) Application number: 16853636.5

(86) International application number:
PCT/JP2016/079652

(22) Date of filing: 05.10.2016

(87) International publication number:
WO 2017/061482 (13.04.2017 Gazette 2017/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 07.10.2015 JP 2015199423

(71) Applicant: JFE Steel Corporation
Tokyo 100-0011 (JP)

(72) Inventor: TAKAGI Katsuhiko
Tokyo 100-0011 (JP)

(74) Representative: Grünecker Patent- und
Rechtsanwälte
PartG mbB
Leopoldstraße 4
80802 München (DE)

(54) **CARBONACEOUS FUEL GASIFICATION METHOD, STEEL MILL OPERATION METHOD, AND GASIFIED GAS PRODUCTION METHOD**

(57) The present invention addresses the problem of providing a carbonaceous fuel gasification method capable of gasifying a carbonaceous fuel at a high yield, a iron mill operation method for utilizing a carbonaceous fuel through gasification thereof at a high yield, and a gasified gas production method capable of producing a gas through gasification from a carbonaceous fuel at a high yield. The problem is solved by supplying a carbonaceous fuel, and a gasification agent containing $H_2$, $CO_2$, and $H_2O$, to a fluidized bed gasification furnace which employs aluminum oxide as a fluidization medium.

FIG. 1

CARBONACEOUS FUEL (Akg/h, CARBON : x%)

PRODUCT GAS (CNm³/h, CO: $Z_1$%, $CO_2$: $Z_2$%, $C_1$: $Z_3$% ・・・ $C_4$: $Z_6$%)

10

16

12

GASIFYING AGENT (SHIFT-CONVERTED IRONMAKING BY-PRODUCT GAS , BNm³/h, $CO_2$: y%)

14

WATER VAPOR

IRONMAKING BY-PRODUCT GAS

EP 3 360 948 A1

**Description**

TECHNICAL FIELD

The present invention relates to a method for gasifying a carbonaceous fuel, a method for operating an iron mill and a method for manufacturing a gasification gas, each of which uses a fluidized bed gasification furnace.

BACKGROUND ART

Many techniques have been disclosed in the past with respect to a method for gasifying a carbonaceous fuel such as coal to convert it into a product gas having a relatively high calorific value.
For example, Patent Literature 1 discloses facilities for gasifying coal, in which a portion of the product gas produced in a coal gasification furnace is extracted and burnt with oxygen to be converted into $CO_2$ and $H_2O$ and the mixed gas of $CO_2$ and $H_2O$ is used as a carrier gas for supplying coal to the coal gasification furnace.
In the facilities for gasifying coal of Patent Literature 1, such constitution increases the combustion heat of the product gas compared to the constitution where $N_2$ is used for carrying coal.
Patent Literature 2 discloses a method of reforming a product gas in a gasification furnace supplied with pure oxygen, so as to increase the calorific value thereof, the method comprising: supplying the gasification furnace with the ironmaking by-product gas containing $CO_2$ that is generated in a steelmaking furnace; and reacting the $CO_2$ in the ironmaking by-product gas with char resulting from the gasification of coal to thereby produce CO.
Patent Literature 3 discloses, as a gasifier for coal coke, a gasifier comprising: a fluidized bed gasification furnace (reactor) containing a fluidized bed consisting of a mixture of coal coke particles and a fluidized medium; and a means for collecting sunlight on the upper surface of the fluidized bed, wherein the gasification furnace has a draft tube that is embedded in the fluidized bed and a means for introducing water vapor into the gasification furnace from below, and wherein the fluidized bed is configured to be circulated and fluidized by the introduced water vapor inside and outside of the draft tube. In Patent Literature 3, quartzose sand ($SiO_2$) is mainly used as a fluidized medium.
The device described in Patent Literature 3 prevents the reaction rate of a fluidized particle from decreasing by using the fluidized bed consisting of the mixture of a coal coke particle and a fluidized medium so as to allow the reaction to progress smoothly.

CITATION LIST

PATENT LITERATURE

Patent Literature 1: JP 2000-355693 A
Patent Literature 2: JP 2007-9069 A
Patent Literature 3: JP 2015-86232 A

SUMMARY OF INVENTION

TECHNICAL PROBLEMS

However, the above conventional techniques have problems with the following.
In the facilities described in Patent Literature 1, a portion of the product gas produced in the gasification furnace is extracted and burnt with oxygen to be converted into $CO_2$ and $H_2O$, and the mixed gas of $CO_2$ and $H_2O$ is used as a carrier gas for coal.
Therefore, the ratio of $CO_2$ to $H_2O$ supplied to the gasification furnace as a carrier gas cannot be optionally controlled. As a result, each of the reactions represented by the following formulas (1) and (2) cannot be controlled to manufacture a product gas at a high yield.

$$C + CO_2 \rightarrow 2CO \qquad (1)$$

$$C + H_2O \rightarrow CO + H_2 \qquad (2)$$

Furthermore, the method described in Patent Literature 2 is to reform a product gas by the reaction, which is represented by the above formula (1), of $CO_2$ in the ironmaking by-product gas and char obtained in the gasification furnace, and the reforming efficiency depends on the concentration of $CO_2$ in the ironmaking by-product gas.

Therefore, there is the same problem of not being able to manufacture a product gas at a high yield as in the facilities of Patent Literature 1.

Moreover, while the device described in Patent Literature 3 can carry out the gasification reaction using solar energy and smoothly progress the gasification reaction, the yield of the product gas is not sufficient. In addition, in the case where silicon dioxide is used as a fluidized medium, when a carbonaceous fuel containing sodium in a high amount such as subbituminous coal is used as a gasification raw material, sodium and silicon dioxide react to produce soda glass, and the soda glass melts in the gasification furnace, causing a problem of inhibiting the smooth gasification.

Therefore, an object of the present invention is to provide a method for gasifying a carbonaceous fuel which can gasify a carbonaceous fuel at a high yield, a method for operating an iron mill in which a carbonaceous fuel is gasified at a high yield and used, and a method for manufacturing a gasification gas which can manufacture a gasification gas from a carbonaceous fuel at a high yield.

SOLUTION TO PROBLEMS

The inventor of the present invention have made studies to solve the above problems and as a result found that when a carbonaceous fuel is gasified in a fluidized bed gasification furnace, it is effective to supply a gasifying agent containing $H_2$, $CO_2$ and $H_2O$ to the fluidized bed gasification furnace as well as to use aluminum oxide as a fluidized medium. The inventor of the present invention have further obtained knowledge of the preferred range of compositional ratios of the crystal system of aluminum oxide and the ironmaking by-product gas, and thus completed the present invention.

The present invention has been made based on such knowledge and is summarized as follows.

Specifically, the present invention provides a method for gasifying a carbonaceous fuel, comprising: using aluminum oxide as a fluidized medium and supplying a gasifying agent containing $H_2$, $CO_2$ and $H_2O$ to a fluidized bed gasification furnace during gasification of a carbonaceous fuel in the fluidized bed gasification furnace.

It is preferred that in the method for gasifying a carbonaceous fuel of the present invention, the gasifying agent is obtained by shift conversion of an ironmaking by-product gas by adding thereto excess water vapor.

It is also preferred that the ironmaking by-product gas has a CO concentration of 5 vol% or more and a $N_2$ concentration of 60 vol% or less.

It is also preferred that the aluminum oxide is at least one selected from $\gamma$-$Al_2O_3$, $\delta$-$Al_2O_3$, $\theta$-$Al_2O_3$ and $\alpha$-$Al_2O_3$.

It is also preferred that the aluminum oxide is $\alpha$-$Al_2O_3$.

It is also preferred that the carbonaceous fuel is at least one selected from peat, lignite and subbituminous coal.

In the first embodiment of the method for operating an iron mill of the present invention, a method for operating an iron mill, comprising: supplying a carbonaceous fuel and a gasifying agent containing $H_2$, $CO_2$ and $H_2O$ to a fluidized bed gasification furnace which uses aluminum oxide as a fluidized medium, thereby gasifying the carbonaceous fuel; and using a resultant gas as at least part of an energy source for an iron mill is provided.

In the second embodiment of the method for operating an iron mill of the present invention, a method for operating an iron mill, comprising: supplying a carbonaceous fuel and a gasifying agent containing $H_2$, $CO_2$ and $H_2O$ to a fluidized bed gasification furnace which uses aluminum oxide as a fluidized medium, thereby gasifying the carbonaceous fuel; and using a resultant gas as at least part of a deoxidizing material for iron oxide is provided.

It is preferred that in the method for operating an iron mill of the present invention, the gasifying agent is obtained by shift conversion of an ironmaking by-product gas by adding thereto excess water vapor.

It is also preferred that the resultant gas is a mixed gas containing CO, $H_2$ and a hydrocarbon having 1 to 4 carbon atoms.

Furthermore, the present invention provides a method for manufacturing a gasification gas, comprising: supplying a carbonaceous fuel and a gasifying agent containing $H_2$, $CO_2$ and $H_2O$ to a fluidized bed gasification furnace which uses aluminum oxide as a fluidized medium, thereby gasifying the carbonaceous fuel.

It is preferred that in the method for manufacturing a gasification gas of the present invention, the gasifying agent is obtained by shift conversion of an ironmaking by-product gas by adding thereto excess water vapor.

ADVANTAGEOUS EFFECTS OF INVENTION

According to the method for gasifying a carbonaceous fuel of the present invention, a carbonaceous fuel can be gasified at a high yield and at a low cost. Also, according to the method for operating an iron mill of the present invention, the operating cost at an iron mill can be reduced by gasifying a carbonaceous fuel at a high yield and using the produced gas as an energy source for the iron mill, and for deoxidizing iron oxide. Further, according to the method for manufacturing a gasification gas of the present invention, a gasification gas can be manufactured at a high yield by gasifying a carbonaceous fuel.

BRIEF DESCRIPTION OF DRAWINGS

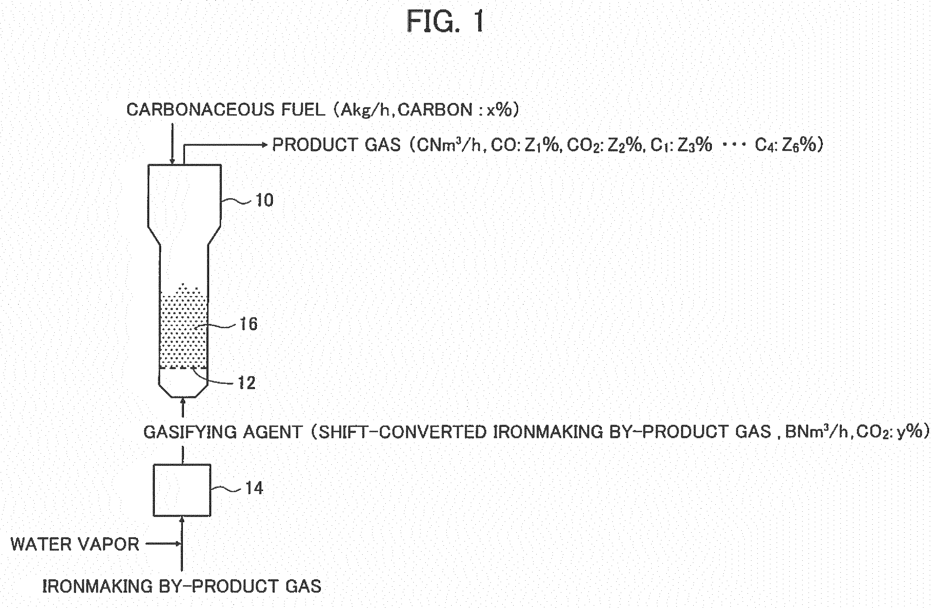

[FIG. 1] FIG. 1 is a schematic diagram for explaining an example of the method for gasifying a carbonaceous fuel, the method for operating an iron mill, and the method for manufacturing a gasification gas of the present invention.

DESCRIPTION OF EMBODIMENTS

The method for gasifying a carbonaceous fuel, the method for operating an iron mill, and the method for manufacturing a gasification gas of the present invention are described below in detail based on the preferred embodiment shown in the attached drawing.

FIG. 1 shows a schematic diagram for explaining an example of the method for gasifying a carbonaceous fuel, the method for operating an iron mill, and the method for manufacturing a gasification gas of the present invention. It is noted that the method for operating an iron mill of the present invention uses the product gas produced by the method shown in FIG. 1 as at least part of energy in an iron mill or as at least part of a deoxidizing material for deoxidizing iron oxide in an iron mill.

The present invention relates to the gasification of a carbonaceous fuel such as coal.

In the example shown in FIG. 1, a gas distribution plate 12 is provided in a fluidized bed gasification furnace 10, and a fluidized bed 16 is formed by filling a space above the gas distribution plate 12 in the fluidized bed gasification furnace 10 with aluminum oxide (powder form) as a fluidized medium. Note that the "fluidized bed gasification furnace 10" is also referred to as a "gasification furnace 10" in the following description.

Moreover, a shift converter 14 is provided below the gasification furnace 10. In FIG. 1, an ironmaking by-product gas and water vapor are supplied to the shift converter 14, and the ironmaking by-product gas converted by the shift converter 14 (shift-converted ironmaking by-product gas) is the gasifying agent. The gasifying agent is blown into the fluidized bed 16 through the gas distribution plate 12, so that the gasifying agent is supplied to the gasification furnace 10 and the fluidized bed 16, that is, aluminum oxide as a fluidized medium.

A carbonaceous fuel such as lignite which is to be a gasification raw material is feeded by a supplier (not shown) in a predetermined amount and is continuously or intermittently supplied into the gasification furnace 10 from the upper part thereof in a certain amount. The carbonaceous fuel supplied to the gasification furnace 10 is gasified by the effect of the gasifying agent and the fluidized medium of aluminum oxide. The product gas produced by the gasification of the carbonaceous fuel is discharged (collected) from the upper part of the gasification furnace 10.

In the present invention, the gasification furnace 10 is not particularly limited. Hence, in addition to the general gasification furnace using the bubbling fluidized bed, various known types of fluidized bed gasification furnaces such as those using a high-velocity fluidized bed, externally circulating fluidized bed, or internally circulating fluidized bed may be used.

The present invention uses a fluidized bed gasification furnace in which heat transfer is fast and aluminum oxide as a fluidized medium so as to prevent temperature distribution in the gasification furnace for the equalization of reaction progress and the product gas, and further causes aluminum oxide to sufficiently exert the catalysis to be described later, making it possible to gasify a carbonaceous fuel at a high yield.

The shift converter 14 is not particularly limited, either, and known reactors, which can perform a shift conversion reaction, such as a fixed bed reactor and a fluidized bed reactor may be used.

The shift converter 14 is typically filled with a commercially available shift catalyst. Furthermore, while there are a low temperature shift catalyst and a high temperature shift catalyst, both of them may be used in the present invention.

In the illustrated example, an ironmaking by-product gas and water vapor are both supplied to the shift converter 14 at the flow rates controlled by means of known methods. Moreover, an ironmaking by-product gas, water vapor, or a mixed gas of an ironmaking by-product gas and water vapor may be preheated, as necessary.

A mixed gas of an ironmaking by-product gas and excess water vapor is supplied to the shift converter 14. It should be noted that the term "excess water vapor" means that the amount of water vapor is excessive with respect to CO contained in the ironmaking by-product gas in formula (1) to be described later.

The ironmaking by-product gas contains CO and $H_2O$. When the ironmaking by-product gas and excess water vapor are supplied to the shift converter 14, the ironmaking by-product gas is shift-converted into a gasifying agent containing $CO_2$, $H_2$ and $H_2O$ (shift-converted ironmaking by-product gas) as represented by the formula (1) below.

$$CO + H_2O \rightarrow CO_2 + H_2 \qquad (1)$$

In other words, the gasifying agent which is obtained by shift conversion of an ironmaking by-product gas by adding thereto excess water vapor contains $CO_2$ and $H_2$ derived from the shift conversion and the remaining $H_2O$ of the excessively added water vapor.

As described above, a carbonaceous fuel which is a gasification raw material is continuously or intermittently supplied from the upper part of the gasification furnace 10 in a certain amount.

The carbonaceous fuel supplied into the gasification furnace 10 is gasified by the effect of the gasifying agent and the fluidized medium. As will also be described in Examples later, the present invention uses aluminum oxide as a fluidized medium (fluidized bed 16) in the gasification of a carbonaceous fuel using a fluidized bed gasification furnace, and thereby can gasify a carbonaceous fuel to manufacture a product gas (a gasification gas) at a high yield. Therefore, it is assumed that aluminum oxide has a catalytic function with respect to the gasification reaction of a carbonaceous fuel, but the details are unknown.

It is noted that the exemplary reactions in each of which aluminum oxide serves the catalytic function include various reforming reactions such as those represented by the formulas (2) to (5) and a hydrocracking reaction as represented by the formula (6).

$$C + CO_2 \rightarrow 2CO \qquad (2)$$

$$C + H_2O \rightarrow CO + H_2 \qquad (3)$$

$$CH_4 + CO_2 \rightarrow 2CO + 2H_2 \qquad (4)$$

$$CH_4 + H_2O \rightarrow CO + 3H_2 \qquad (5)$$

$$C_2H_6 + H_2 \rightarrow 2CH_4 \qquad (6)$$

It is noted that while the carbonaceous fuel is supplied from the upper part of the gasification furnace 10 in the example shown in FIG. 1, the carbonaceous fuel may be supplied at the middle part of the gasification furnace 10 or directly be supplied to the region of the fluidized bed 16 at the lower part of the gasification furnace 10.

Furthermore, a carrier gas such as $N_2$ may be supplied to a pipe for supplying a carbonaceous fuel to the gasification furnace 10 so that the carbonaceous fuel may be supplied to the gasification furnace 10 along with the carrier gas.

The product gas produced by the gasification of a carbonaceous fuel is extracted from the upper part of the gasification furnace 10, refined through, for example, a cyclone, a gas scrubber, or an oil water separator (not shown), and then taken out from the system as a product gas.

The taken-out, product gas is widely applicable as a fuel. In the method for operating an iron mill of the present invention, the product gas produced in such a way is used as an energy source and a deoxidizing material for iron oxide in an iron mill.

In the following, preferred conditions for the method for gasifying a carbonaceous fuel, the method for operating an iron mill, and the method for manufacturing a gasification gas of the present invention are described in detail.

In the present invention, a carbonaceous fuel is gasified using a fluidized bed gasification furnace. Moreover, aluminum oxide is used as a fluidized medium.

Various known types of aluminum oxide may be used, while it is preferable to use one or more types of aluminum oxide selected from $\gamma$-$Al_2O_3$, $\delta$-$Al_2O_3$, $\theta$-$Al_2O_3$ and $\alpha$-$Al_2O_3$. Of those types of aluminum oxide, $\alpha$-$Al_2O_3$ is particularly preferred taking account of the stability, the handleability and the fact that any other types of aluminum oxide including $\gamma$-$Al_2O_3$ change to $\alpha$-$Al_2O_3$ at the gasification temperature to be described later.

Aluminum oxide exhibits not only sufficient heat resistance during the gasification of a carbonaceous fuel but also a catalytic function for the gasification of a carbonaceous fuel as described above. Hence, the present invention can gasify a carbonaceous fuel to manufacture a product gas (a gasification gas) at a high yield, and the product gas manufactured at a high yield can be used as energy for an iron mill and a deoxidizing material for iron oxide.

The mean particle diameter of aluminum oxide is not particularly limited and is set as appropriate according to, for example, the size of the gasification furnace 10, the expected filling amount or the feed rate of a gasifying agent.

In the present invention, aluminum oxide is used as a fluidized medium of the (fluidized bed) gasification furnace 10. In this regard, the mean particle diameter of aluminum oxide is preferably about 30 to 300 $\mu$m and more preferably about 50 to 200 $\mu$m. By setting the mean particle diameter of aluminum oxide to 30 to 300 $\mu$m, good fluidity can be ensured and the gasification furnace 10 can be stably operated.

The filling amount of aluminum oxide is not particularly limited and is set as appropriate according to, for example, the size of the gasification furnace 10, the amount of the carbonaceous fuel to be supplied to the gasification furnace 10 or the amount of the gasifying agent to be supplied to the gasification furnace 10 so as to properly gasify the carbonaceous fuel.

The gasifying agent used for the gasification of a carbonaceous fuel contains $H_2$, $CO_2$ and $H_2O$.

In the illustrated example, as a preferred embodiment, the shift-converted ironmaking by-product gas obtained by shift conversion of an ironmaking by-product gas by adding thereto excess water vapor is used as the gasifying agent

containing $H_2$, $CO_2$ and $H_2O$.

The gasifying agent obtained by shift conversion of an ironmaking by-product gas is less expensive than the gasifying agent obtained by mixing a pure $H_2$ gas and a pure $CO_2$ gas with water vapor, and thus is preferred.

The ironmaking by-product gas which is to be a gasifying agent by shift conversion preferably has a CO concentration of 5 vol% or more, and a $N_2$ concentration of 60 vol% or less.

When the CO concentration of the ironmaking by-product gas is 5 vol% or more, the concentrations of $H_2$ and $CO_2$ in the gasifying agent obtained by shift conversion become sufficiently high and the yield of the product gas can be improved. Moreover, when the $N_2$ concentration of the ironmaking by-product gas is 60 vol% or less, sufficient combustion heat of a gaseous fuel can be obtained as well as the shift reaction rate can be improved.

It is particularly preferable that specific examples of the ironmaking by-product gas include, in terms of the preferred gas composition described above, a blast furnace gas and a shaft furnace gas (of such a general composition as: 10 to 30 vol% CO; 10 to 30 vol% $CO_2$; 55 to 30 vol% $N_2$; 0 to 10 vol% $H_2$).

While other ironmaking by-product gases containing CO may also be used, the gas composition thereof preferably falls within the above preferred range. Examples of other ironmaking by-product gases containing CO include exhaust gases generated from a metallurgical furnace, such as an exhaust gas discharged from a combustion furnace and a converter gas in an iron mill. Any one of those ironmaking by-product gases may be solely used, or two or more thereof may be used by mixing them.

In the present invention, the concentrations of $H_2$, $CO_2$ and $H_2O$ in the gasifying agent are not particularly limited.

The concentration of $H_2O$ is preferably about 5 to 70 vol% from the viewpoint of preventing $CO_2$ from remaining in a product gas while ensuring the yield of the product gas. Moreover, the concentrations of $H_2$ and $CO_2$ in the gasifying agent are both preferably 3 vol% or more from the viewpoint of ensuring the yield of a product gas. From a similar viewpoint, the gasifying agent preferably has such a composition that the $H_2O$ concentration is 20 to 70 vol%, the $H_2$ concentration is 5 to 40 vol%, and the $CO_2$ concentration is 5 to 40 vol%. It should be noted that other components (for example, $N_2$) than those components described above may also be contained.

It is noted that the gasifying agent used in the present invention is not limited to the shift-converted ironmaking by-product gas obtained by shift conversion of an ironmaking by-product gas by adding thereto excess water vapor as described above.

Specifically, the gasifying agent prepared by, for example, mixing water vapor produced by, for example, a boiler with a $H_2$ gas and $CO_2$ obtained by vaporization of liquefied gas may be used in the present invention. Alternatively, the gasifying agent containing $H_2$, $CO_2$ and $H_2O$ which is prepared by refining and mixing the by-product gases generated in, for example, ironmaking steps may be used in the present invention.

The supplying amount of the gasifying agent is not particularly limited and is set as appropriate according to, for example, the size of the gasification furnace 10, the amount of aluminum oxide with which the gasification furnace 10 is filled or the supplying amount of a carbonaceous fuel so as to properly gasify the carbonaceous fuel.

Various known types of carbonaceous fuels such as coal, biomass, and wastes such as waste tires and waste plastics may be used as a carbonaceous fuel which is to be a gasification raw material.

Among others, the carbonaceous fuel is preferably at least one selected from peat, lignite and subbituminous coal. Peat, lignite and subbituminous coal are carbonaceous fuels which are relatively easy to gasify, as well as are relatively inexpensive and massively present resources, and thus are preferably used.

In the present invention, any method for supplying a carbonaceous fuel may be used, and a dry supplying method or a wet supplying method using, for example, water slurry may be used.

The size of the carbonaceous fuel is not particularly limited, and is set to a standard size of a solid raw material to be supplied to a fluidized bed. Specifically, the size of the carbonaceous fuel is preferably 1 to 50 mm and more preferably 3 to 30 mm. The carbonaceous fuel may also be granulated by any known method.

The supplying amount of the carbonaceous fuel is not limited either, and is set as appropriate according to, for example, the size of the gasification furnace 10, the amount of aluminum oxide with which the gasification furnace 10 is filled, and the suppliable amount of a gasifying agent so as to properly gasify the carbonaceous fuel.

The gasification reaction temperature of the carbonaceous fuel is not limited either, and is preferably 600 to 1500°C and more preferably 800 to 1200°C.

By setting the reaction temperature to 600°C or higher, the yield of a product gas can be improved and a high viscous tar-like substance is prevented from being collaterally produced, so that troubles such as the blocking of piping can be avoided. Moreover, by setting the reaction temperature to 1500°C or lower, a product gas having high combustion heat can be obtained. Furthermore, it is preferable to set the reaction temperature to 1500°C or lower in that the amount of the heat source charged into the gasification furnace 10 can be decreased to reduce the cost.

The method for heating the gasification furnace 10 is not particularly limited either, and well-known methods used for heating a gasification furnace in the gasification of a carbonaceous fuel such as a method using an external heater and a method supplying a heating medium to a jacket covering a gasification furnace may be used.

The method for operating an iron mill of the present invention uses the gas produced by the same processing as in the method for gasifying a carbonaceous fuel of the present invention for the operation of an iron mill, and includes supplying a carbonaceous fuel and a gasifying agent containing $H_2$, $CO_2$ and $H_2O$ to a fluidized bed gasification furnace which uses aluminum oxide as a fluidized medium so as to gasify the carbonaceous fuel, and using a product gas as at least part of an energy source for an iron mill in a first embodiment and as at least part of a deoxidizing material for deoxidizing iron oxide in ironmaking in a second embodiment.

The product gas of the present invention has a wide range of applications as a fuel gas and is reasonably used as an energy source in an iron mill because a shift-converted ironmaking by-product gas is preferably used as a gasifying agent as described above. The product gas of the present invention may specifically be used as a fuel for a nonutility generator, a fuel gas for sintering iron ores, a fuel gas for a hot-blast stove of a blast furnace, or a raw material gas for a mixed gas prepared by mixing various by-product gases.

Furthermore, the product gas of the present invention is a gas containing CO, $H_2$, and hydrocarbons having 1 to 4 carbon atoms. Therefore, the product gas can also be used as a deoxidizing material for iron oxide to be put in a blast furnace, a shaft furnace or the like. The iron oxide includes, other than iron ore, dust and sludge containing iron oxide generated in a blast furnace, a converter or the like.

As will also be described below in Examples, the present invention makes it possible to obtain a product gas from a carbonaceous fuel at a high yield. Therefore, the method for operating an iron mill of the present invention can reduce the cost for energy used in an iron mill and the cost for deoxidizing an oxidation gas.

Furthermore, the method for manufacturing a gasification gas of the present invention manufactures a gasification gas by the same processing as in the method for gasifying a carbonaceous fuel of the present invention, and includes supplying a carbonaceous fuel and a gasifying agent containing $H_2$, $CO_2$ and $H_2O$ to a fluidized bed gasification furnace which uses aluminum oxide as a fluidized medium so as to gasify the carbonaceous fuel.

As described above, the present invention makes it possible to obtain a product gas from a carbonaceous fuel at a high yield. Therefore, the method for manufacturing a gasification gas of the present invention can manufacture a gasification gas at a high yield and reduce the cost for manufacturing a gasification gas.

Although the method for gasifying a carbonaceous fuel, the method for operating an iron mill, and the method for manufacturing a gasification gas of the present invention are specifically described above, it should not be understood that the present invention is limited to the embodiments described above, and various improvements and modifications may be made without departing from the scope of the present invention.

EXAMPLES

The method for gasifying a carbonaceous fuel, the method for operating an iron mill, and the method for manufacturing a gasification gas of the present invention are described below in further detail by way of specific examples of the present invention.

It should be noted that the present invention is not limited to the following examples.

[Example 1]

A micro fluidized bed gasification testing apparatus (inner diameter, 22 mm) which can supply coal through dry supply at a rate of 10 to 30 g/h (hour) was prepared.

The inside of the gasification testing apparatus was filled with $\alpha$-$Al_2O_3$, a reagent manufactured by Kojundo Chemical Laboratory Co., Ltd., as a fluidized medium to the layer height of 75 mm in a still state. Furthermore, the mixed gas containing: 16 vol% $H_2$; 58 vol% $H_2O$; 20 vol% $CO_2$; and 6 vol% $N_2$ was prepared as a simulated shift-converted ironmaking by-product gas to be a gasifying agent.

The gasifying agent was supplied from the lower part of the fluidized bed at a rate of 400mL (milliliter) / min to fluidize the $\alpha$-$Al_2O_3$.

Lignite (volatile content, 55 wt%; fixed carbon content, 36 wt%; ash content, 8 wt%) was granulated with water as a binder to obtain lignite granules with a diameter $\Phi$ of 1 to 3 mm, and the granules thus obtained were used as a carbonaceous fuel (water content after granulation, 14 wt%).

After increasing the inside temperature of the fluidized bed to 1000°C by an external heater, the granulated lignite was supplied at a rate of 20 g/h to start a gasification reaction. The reaction time was one hour and gas sampling was carried out every 20 minutes, that is to say, three times altogether, to analyze the product gas.

It was found by averaging the results of three gas analyses that the carbon-based yield of the product gas was 52% and the combustion heat of the product gas was 2.7 Mcal/Nm$^3$, proving that a gas with relatively high combustion heat was obtained at a high yield. It is presumed that aluminum oxide serves as a good catalyst for a gasification reaction of a carbonaceous fuel taking account of the above result and the result of Comparative Example 1 to be described later.

As the gas components in the product gas, CO, $H_2$ and hydrocarbons having 1 to 4 carbon atoms (mixture of paraffin and olefin) were contained in a total amount of 83 vol%. Other than those components, $N_2$ and $CO_2$ were

contained as incombustible components. Since the total concentration of CO, $H_2$ and hydrocarbons having 1 to 4 carbon atoms in the product gas was 83 %, there are evidently no problems with the use of the product gas as an energy source for an iron mill, and as a deoxidizing material for iron oxide as well.

It is noted that the carbon-based yield of the product gas was determined as described below.

In the present invention, the carbon source supplied to the gasification furnace (gasification testing apparatus) is the carbonaceous fuel (lignite) and the gasifying agent (simulated shift-converted ironmaking by-product gas).

When the amount of the carbonaceous fuel supplied to the gasification furnace is A kg/h and the carbon concentration of the carbonaceous fuel is x wt%, the amount $\beta$ [kmol/h] of the carbonaceous fuel-derived carbon which is supplied to the gasification furnace can be calculated by the following equation. Note that the value "12" in the following equation is the atomic weight of carbon.

$$\beta\ [kmol/h]\ =\ (A/12)\ *\ (x/100)$$

Moreover, when the amount of the gasifying agent supplied to the gasification furnace is B $Nm^3$/h and the $CO_2$ concentration of the gasifying agent is y vol%, the amount $\gamma$ [kmol/h] of the gasifying agent-derived carbon which is supplied to the gasification furnace can be calculated by the following equation. Note that the value "22. 4" in the following equation is the volume (L) of one mole of gas.

$$\gamma\ [kmol/h]\ =\ (B/22.\ 4)\ *\ (y/100)$$

Specifically, $\beta + \gamma$ [kmol/h] is the amount of carbon supplied to the gasification furnace.

Meanwhile, the amount of the product gas produced in the gasification furnace is to be C $Nm^3$/h.

As described above, the product gas contains CO, $CO_2$, a hydrocarbon having 1 carbon atom ($C_1$), a hydrocarbon having 2 carbon atoms ($C_2$), a hydrocarbon having 3 carbon atoms ($C_3$), and a hydrocarbon having 4 carbon atoms ($C_4$) as carbon compounds. When the CO content of the product gas is $Z_1$ vol%, the $CO_2$ content of the same is $Z_2$ vol%, the $C_1$ content of the same is $Z_3$ vol%, the $C_2$ content of the same is $Z_4$ vol%, the $C_3$ content of the same is $Z_5$ vol%, and the $C_4$ content of the same is $Z_6$ vol%, the amount $\alpha$ [kmol/h] of carbon in the product gas is calculated by the following equation. Note that the value "22. 4" in the following equation is the volume (L) of one mole of gas.

$$\alpha\ [kmol/h]\ =$$
$$\{C\ *\ [(Z_1\ +\ Z_2\ +\ Z_3\ +\ 2Z_4\ +\ 3Z_5\ +\ 4Z_6)/100]\}/22.\ 4$$

In the present invention, the product gas produced in the gasification furnace also contains carbon derived from the gasifying agent. According to this, the carbon-based yield of the product gas [%] is calculated by the following equation using the subtraction of the amount $\gamma$ of the gasifying agent-derived carbon supplied to the gasification furnace from the carbon amount $\alpha$ in the product gas.

$$Yield\ of\ product\ gas\ [\%]\ =\ [(\alpha\ -\ \gamma)/(\beta\ +\ \gamma)]/100$$

[Example 2]

The gasification testing was performed in the same manner as that in Example 1, except that subbituminous coal which had the volatile content of 40 wt%, fixed carbon content of 52 wt%, the ash content of 9 wt%, and the moisture content after the granulation of 3 wt% was used as the carbonaceous fuel.

As a result, the carbon-based yield of the product gas was 16 % and the combustion heat of the product gas was 2.4 $Mcal/Nm^3$. Although the yield of the gas was decreased compared to that in the case where lignite was used, the gas having high combustion heat was obtained in a relatively high yield taking account of the fixed carbon content of 52 wt%. It is presumed that, similarly to Example 1, aluminum oxide serves as a good catalyst for a gasification reaction of a carbonaceous fuel taking account of the above result and the result of Comparative Example 2 to be described later.

As the gas components in the product gas, CO, $H_2$ and hydrocarbons having 1 to 4 carbon atoms (mixture of paraffin and olefin) were contained in a total amount of 71 vol%. Other than those components, $N_2$ and $CO_2$ were contained as incombustible components. Since the total concentration of CO, $H_2$ and hydrocarbons having 1 to 4 carbon atoms in the product gas was 71 vol%, there are evidently no problems with the use of the product gas as an energy source for an iron mill, and as a deoxidizing material for iron oxide as well.

[Comparative Example 1]

The gasification testing was performed in the same manner as that in Example 1, except that industrial silica sand ($SiO_2$) was used as the fluidized medium.

As a result, the carbon-based yield of the product gas was 37% and the combustion heat of the product gas was 2.9 Mcal/Nm$^3$. It is presumed that $SiO_2$ is completely inert as a catalyst for a gasification reaction, and thus the yield of the gas extremely decreased compared to that in Example 1 in which $\alpha$-$Al_2O_3$ was used as the fluidized medium. Meanwhile, the combustion heat of the product gas was similar to that in Example 1.

[Comparative Example 2]

The gasification testing was performed in the same manner as that in Example 2, except that industrial silica sand ($SiO_2$) was used as the fluidized medium.

As a result, the carbon-based yield of the product gas was 9% and the combustion heat of the product gas was 2.3 Mcal/Nm$^3$. Similarly to Comparative Example 1, in this Example in which $SiO_2$ having no catalytic activity was used as the fluidized medium, the yield of the gas extremely decreased compared to that in Example 2. Meanwhile, the combustion heat of the product gas was similar to that in Example 2.

INDUSTRIAL APPLICABILITY

The methods of the invention are suitably applicable for producing a fuel gas used for, for example, iron and steel industries and power generating industries as well as for deoxidizing iron oxide in an iron mill.

REFERENCE SIGNS LIST

10  gasification furnace
12  gas distribution plate
14  shift converter
16  fluidized bed

**Claims**

1. A method for gasifying a carbonaceous fuel, comprising: using aluminum oxide as a fluidized medium and supplying a gasifying agent containing $H_2$, $CO_2$ and $H_2O$ to a fluidized bed gasification furnace during gasification of a carbonaceous fuel in the fluidized bed gasification furnace.

2. The method for gasifying a carbonaceous fuel according to claim 1, wherein the gasifying agent is obtained by shift conversion of an ironmaking by-product gas by adding thereto excess water vapor.

3. The method for gasifying a carbonaceous fuel according to claim 2, wherein the ironmaking by-product gas has a CO concentration of 5 vol% or more and a $N_2$ concentration of 60 vol% or less.

4. The method for gasifying a carbonaceous fuel according to any one of claims 1 to 3, wherein the aluminum oxide is at least one selected from $\gamma$-$Al_2O_3$, $\delta$-$Al_2O_3$, $\theta$-$Al_2O_3$ and $\alpha$-$Al_2O_3$

5. The method for gasifying a carbonaceous fuel according to any one of claims 1 to 3, wherein the aluminum oxide is $\alpha$-$Al_2O_3$.

6. The method for gasifying a carbonaceous fuel according to any one of claims 1 to 5, wherein the carbonaceous fuel is at least one selected from peat, lignite and subbituminous coal.

7. A method for operating an iron mill, comprising: supplying a carbonaceous fuel and a gasifying agent containing $H_2$, $CO_2$ and $H_2O$ to a fluidized bed gasification furnace which uses aluminum oxide as a fluidized medium, thereby gasifying the carbonaceous fuel; and using a resultant gas as at least part of an energy source for an iron mill.

8. A method for operating an iron mill, comprising: supplying a carbonaceous fuel and a gasifying agent containing $H_2$, $CO_2$ and $H_2O$ to a fluidized bed gasification furnace which uses aluminum oxide as a fluidized medium, thereby gasifying the carbonaceous fuel; and using a resultant gas as at least part of a deoxidizing material for iron oxide.

9. The method for operating an iron mill according to claim 7 or 8, wherein the gasifying agent is obtained by shift conversion of an ironmaking by-product gas by adding thereto excess water vapor.

10. The method for operating an iron mill according to any one of claims 7 to 9, wherein the resultant gas is a mixed gas containing CO, $H_2$ and a hydrocarbon having 1 to 4 carbon atoms.

11. A method for manufacturing a gasification gas, comprising: supplying a carbonaceous fuel and a gasifying agent containing $H_2$, $CO_2$ and $H_2O$ to a fluidized bed gasification furnace which uses aluminum oxide as a fluidized medium, thereby gasifying the carbonaceous fuel.

12. The method for manufacturing a gasification gas according to claim 11, wherein the gasifying agent is obtained by shift conversion of an ironmaking by-product gas by adding thereto excess water vapor.

# FIG. 1

CARBONACEOUS FUEL (Akg/h, CARBON : x%)

PRODUCT GAS (CNm³/h, CO: $Z_1$%, $CO_2$: $Z_2$%, $C_1$: $Z_3$% $\cdots$ $C_4$: $Z_6$%)

10

16

12

GASIFYING AGENT (SHIFT-CONVERTED IRONMAKING BY-PRODUCT GAS , BNm³/h, $CO_2$: y%)

14

WATER VAPOR

IRONMAKING BY-PRODUCT GAS

## INTERNATIONAL SEARCH REPORT

| International application No. |
|---|
| PCT/JP2016/079652 |

**A. CLASSIFICATION OF SUBJECT MATTER**

*C10J3/54*(2006.01)i, *C21B5/00*(2006.01)i

According to International Patent Classification (IPC) or to both national classification and IPC

**B. FIELDS SEARCHED**

Minimum documentation searched (classification system followed by classification symbols)

C10J3/54, C21B5/00

Documentation searched other than minimum documentation to the extent that such documents are included in the fields searched

| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2015-131277 A (JFE Steel Corp.),<br>23 July 2015 (23.07.2015),<br>paragraph [0091]<br>(Family: none) | 1-4,7-12<br>5-6 |
| X<br>Y | JP 2015-131916 A (JFE Steel Corp.),<br>23 July 2015 (23.07.2015),<br>paragraph [0078]<br>(Family: none) | 1-4,7-12<br>5-6 |
| X<br>Y | JP 2014-37524 A (JFE Steel Corp.),<br>27 February 2014 (27.02.2014),<br>paragraph [0061]<br>(Family: none) | 1-4,7-12<br>5-6 |

| [×] Further documents are listed in the continuation of Box C. | [ ] See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>01 November 2016 (01.11.16) | Date of mailing of the international search report<br>15 November 2016 (15.11.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

## INTERNATIONAL SEARCH REPORT

International application No.

PCT/JP2016/079652

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2004-517169 A  (Ebara Corp.),<br>10 June 2004 (10.06.2004),<br>paragraph [0009]<br>& US 2004/0045272 A1<br>paragraph [0010]<br>& WO 2002/051966 A1 | 5 |
| Y | JP 2000-140800 A  (Ebara Corp.),<br>23 May 2000 (23.05.2000),<br>paragraph [0013]<br>& US 5922090 A<br>column 5, lines 2 to 4<br>& EP 776962 A2          & CN 1155641 A | 6 |

Form PCT/ISA/210 (continuation of second sheet) (January 2015)

**EP 3 360 948 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000355693 A
- JP 2007009069 A
- JP 2015086232 A